# EUROPEAN PATENT SPECIFICATION

(11) **EP 0 750 202 B1**
(45) Date of publication and mention of the grant of the patent: **13.05.1998**
(21) Application number: 96912344.7
(22) Date of filing: 26.03.1996
(51) Int. Cl.: G01S 7/489

(54) **METHOD OF OBSERVING OBJECTS UNDER LOW LEVELS OF ILLUMINATION AND A DEVICE FOR CARRYING OUT THE SAID METHOD**
VERFAHREN UND GERÄT ZUM BEOBACHTEN VON OBJEKTEN BEI GERINGER BELEUCHTUNG
PROCEDE PERMETTANT D'OBSERVER DES OBJETS DANS DE FAIBLES CONDITIONS D'ECLAIRAGE ET DISPOSITIF PERMETTANT DE METTRE EN UVRE LEDIT PROCEDE

(30) Priority: 01.03.1996 RU 96103436
(43) Date of publication of application: 27.12.1996
(73) Proprietor: YALESTOWN CORPORATION N.V., Curaçao, Netherlands Antilles (AN)
(72) Inventor: MOROZOV, Alexei Vitalievich, Moscow, 123181 (RU); SOUKHOROSSOV, Sergey Yurievich, Moscow, 141070 (RU)
(74) Representative: BOVARD AG - Patentanwälte
(86) International application number: RU9600069
(87) International publication number: WO9619100

(56) References cited:
- EP-A- 0 353 200
- DE-C- 4 324 308
- FR-A- 1 107 192
- GB-A- 2 087 188
- GB-A- 2 286 495
- RU-C- 2 040 015
- US-A- 4 477 184

## Description

### BACKGROUND OF THE INVENTION.

A method disclosed in EP No. 363735 for imaging objects in low illumination is known according to which a subject of observation is illuminated by a pulsed source of light. Light reflected back from the object is received by an optical image receiver. The operation of a controlled shutter of the image receiver is synchronised to the emission of light pulse. The device realising this method comprises a pulsed source of light with a transmitting optics, an optical image receiver with a controlled shutter. Adjusting the delay between the moment of light pulse emission and the moment when the shutter opens, images of objects lying in a zone of most interest can be obtained.

A disadvantage of the known method and the device is that using one light source and one camera it is possible to obtain images only of the objects lying in a narrow zone of visibility. One way to extend the zone of visibility is to increase the number of simultaneously operating light sources (pulses) or cameras (each source or camera operates at its own range) with the further summarising of videosignals. Such a device would however be significantly more cumbersome, and the power of its light source would not be used in full (see EP N^{º} 0468175). Apart of this such a device does not use a natural ambient illumination which enables to get additional information about the objects.

The most relevant prior art method and device is disclosed in UK patent Nº 2212689. According to this method an object (objects) is illuminated by a pulsed source of light and by an additional constant source of illumination. Light reflected back from the objects is received by an optical image detector, the operation of its controllable gate is synchronized to the emission of light pulse. The device for imaging objects in reduced illumination comprises a pulsed source of light with a combining optics and an additional constant source of light, an optical image detector with an adjustable gain, means for an automatic adjustment of mean image brightness and a control unit which input is connected with one of the outputs of synchronising unit, another output of which being connected with the input of the pulsed source of light.

This invention partly overcomes the above-described disadvantages. Additional information about the objects is obtained by use of natural ambient illumination or additional lighting of the scene to be viewed. In so doing the brightness of objects located at various distances from the device and illuminated by the constant source of light will differ and, in presence of a great number of objects at the image foreground, images of objects at the background will be shaded. The same effect will occur if operate in turbid medium (fog, snowfall, smoke, etc.).

### SUMMARY OF THE INVENTION

The present invention overcomes the above named disadvantages of this prior art and provides a uniformly bright image of objects located at various distances within the field of view of the device using both natural ambient illumination and an additional source of light, providing the possibility to separate objects in the zone of most interest according to their brightness.

Due to the fact that in conditions of reduced light level images of objects lying at various distances are of equal brightness, the present invention is appropriate for use on motor vehicles where there is a need to have images of all the objects lying in front of the vehicle at the same time, but not only of the objects located at a certain distance. It enables a constant control over the current situation as well as makes the situation predictable, keeping the possibility to separate objects at certain distance out of the received image of the whole scene.

The above-named objects of the present invention are obtained by use of an embodiment where, after emission of each light pulse, the gain of an optical image receiver is being constantly increased up to the moment when the light reflected from the most distant objects located within a chosen zone under observation comes back to the receiver in such a way as to provide images of equal brightness of the illuminated objects selected for viewing. In order to receive images of objects in additional illumination the gain is set to a fixed level and being hold at this level until the emission of the next light pulse. In addition to this, in order to separate concrete objects in illuminated zone under viewing, the gain instantly increases when light first reflected by these objects gets the receiver, then the gain is constantly increasing and then is instantly reduced when light last reflected by these objects gets the receiver. Natural ambient illumination can be used as the additional light source.

To obtain the above-described objects of the present invention, the synchronising unit and the control unit are made in such a way as to provide the possibility to synchronise each light pulse and to increase the gain of the optical image receiver up to the moment when light reflected by the most distant objects in the zone under observation comes back to the receiver and to hold the gain at a constant level until the moment of emission of the next light pulse. The optical image receiver may comprise an image intensifier, the gain of which is controlled by means of varying the control voltage on its microchannel plate . The synchronising unit and the control unit may be made to provide the possibility of instant increase of the image intensifier gain, its further increasing and instant decrease in order to separate some concrete objects in the zone under observation.

The above-discussed and other features and advantages of the present invention will be appreciated and understood from the following detailed description and drawings.

### BRIEF DESCRIPTION OF THE DRAWINGS.

Referring now to the drawings, wherein like elements are numbered alike in the several figures:
- Fig. 1: is a block diagram depicting the device in accordance with the present invention;
- Fig. 2: is a block diagram of the synchronising unit and the control unit of the optical image receiver;
- Fig. 3: is a block diagram of the optical image receiver and the control unit of the objective lens;
- Fig. 4: are timing diagrams of operation of the device for object imaging in reduced illumination.

### DESCRIPTION OF THE PREFERRED EMBODIMENT.

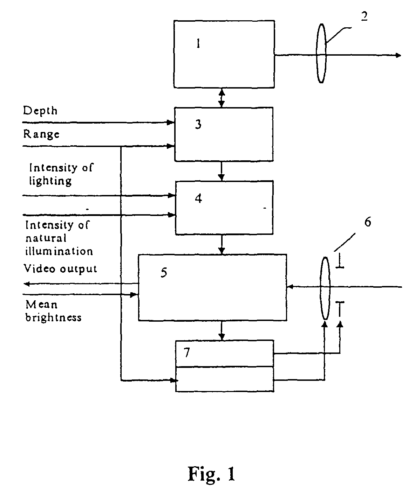

Referring first to Fig. 1, the device for object imaging in reduced illumination comprises a pulsed source of light 1. Light is propagated through a transmitting (forming) optics 2 toward the subject of observation. The input of the light source is connected with the first output of a synchronising unit 3. The second output of the synchronising unit 3 is connected with a control unit 4 of an optical image receiver. The output of the control unit of the optical image receiver is connected with the optical image receiver 5. The image receiver comprises a receiving optics (objective lens) 6. A control unit of the objective lens is coupled to the image receiver and the synchronising unit.

The synchronising unit 3 triggers the pulsed source of light I which is used together with forming optics 2 to provide a pulsed illumination of objects (not shown in Fig. 1). Simultaneously with the light source 1 triggering, the synchronising unit 4 triggers the control unit 4 which is continuously increasing the receiver gain 5 in such a way that images of illuminated objects are of equal brightness. In addition to that, the synchronising unit 3 generates a signal which is intended to select objects located at a certain range within a zone of some depth. The said depth and range are to be set by external signals. The above-named selection signal is applied to the control unit 4 which increases instantly the gain of the image receiver 5, then keeps it rising, and reduces the gain instantly when light reflected last from objects at a certain range gets the receiver. When signals at the output of the synchronising unit 3 stop to act, the control unit 4 sets the gain of the receiver to a constant level. This enables receiving images of objects in natural ambient illumination. The value of constant gain level defines the object image brightness in natural ambient light, while the value of the instant gain increase/decrease determines the image brightness of selecting concrete objects using additional lighting. These values of brightness may be set by external signals. The image receiver 5 with a receiving objective lens is purposed to form images of the objects to be viewed (optical or televisual). The gain of the receiver is adjusted by the control unit 4. Mean level of the image receiver gain 5 defines mean brightness of the received image and may be set by an external signal. The objective lens control unit 7 serves to set automatically an iris and the focus in dependence on the received images brightness and distance to the concrete selected objects correspondingly.

### EXAMPLE OF THE EMBODIMENT.

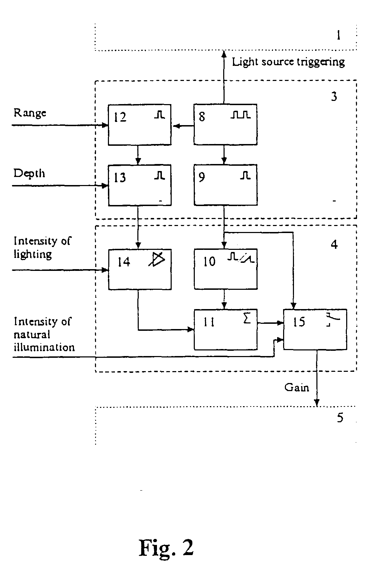

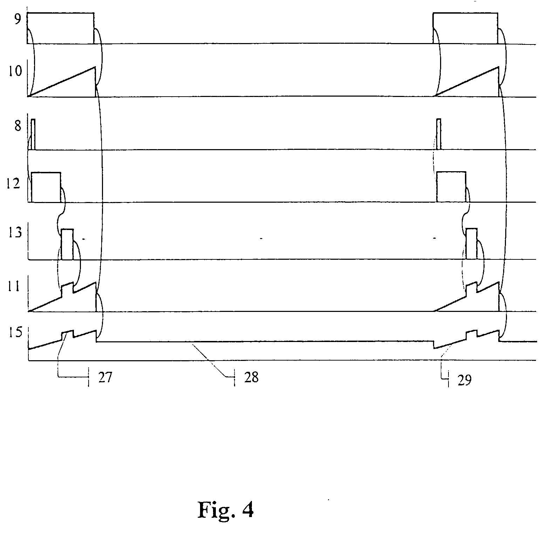

Referring now to Fig. 2 the synchronising unit includes a master oscillator 8 which generates a pulse which triggers a light source. The light pulse emitted by the light source propagates towards the subjects of observation. Then the light is reflected by the objects and comes back to the receiver. Coincidentally with the light source triggering, the master oscillator 8 triggers a one-shot multivibrator 9 which forms a pulse which duration equals to the time required for the light to get the object lying at a maximum range. The maximum range is the range to the subjects of observation, light reflected by which is still detectable by the image receiver. The pulse from the one-shot multivibrator 9 enters a saw-tooth voltage generator 10 which forms a triangular pulse, see fig. 4. The triangular pulse then enters a summer 11. This pulse serves to equalise image brightness of objects illuminated by the light source and lying at different distances. To say more exactly, this pulse serves to equalise the brightness of objects located within the field of view at various distances in illumination provided by the pulsed source of light.

The master vibrator 8 also triggers a one-shot multivibrator 12, which generates pulses a duration of which is set manually by the operator and the duration equals to the time required for the light to go from the light source to the nearest edge of the illuminated zone where some concrete objects are located and back to the receiver. The one-shot multivibrator 12, in its turn, triggers a one-shot multivibrator 13 which generates pulses with a duration that is manually set up and equals to the time required for the light to propagate from the nearest edge of the illuminated zone to the far edge and back to the nearest edge. The pulse generated by the one-shot multivibrator is manually adjusted for amplitude through the use of an amplifier 14 and is applied to the summer 11. The pulse at the output of the amplifier 14 determines the distance to the nearest edge of the zone to be illuminated, its depth and brightness, that means, it serves to separate some concrete objects according to their brightness located within a zone of most interest . The signal from the summer is applied to the switch 15 which transmits the signal from the summer 11 to the output when the pulse at the output of one-shot multivibrator 9 is active that corresponds to the receiving of an image obtained mainly under the light of pulsed light source. After the pulse at the output of the one-shot multivibrator 9 stops to act, a signal of a manually pre-set constant level is applied to the output of the switch 15. This signal serves to adjust the brightness of images formed in other (including natural) light sources, and therefore, the problem of forming object images under the natural ambient illumination is resolved. As a result, at the output of the switch 15 a signal with a profile having three specific parts is formed: part 29 is purposed to form images of equal brightness in additional illumination provided by the pulsed source of light, part 27 purposed to illuminate objects of most interest, and part 28 purposed to form images in natural ambient illumination.

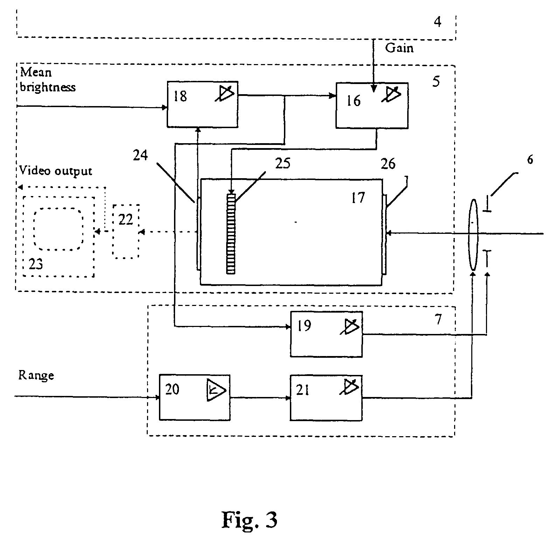

The gain control signal formed in such a manner is applied to the image receiver 5. The image receiver can be made on the base of an image intensifier with a microchannel plate (MCP). As it is shown in fig. 3 the above-named signal after the amplification by the amplifier 16 is applied to the microchannel plate 25 of the image intensifier 17 which forms on its screen 24 an intensified image which was received on the photocathode 26 by use of a receiving objective lens 6. As the gain of the MCP is proportional to the square voltage, the linearly varying gain control voltage will compensate the inverse square dependence of the irradiance of objects under observation upon the range during the image receiving in a pulsed illumination and, therefore, the images will be of equal brightness.

A television camera 22 may be used to transform the image on the screen of the image intensifier 17 into a television signal. For further processing, a videosignal from the television camera is applied to the video monitor 23 or other televisual means.

For automatic control of the mean image brightness, the signal proportional to the current on the image intensifier screen is applied to the input of a threshold amplifier 18, the functioning threshold of which is manually adjustable for setting the mean image brightness. The output signal from the amplifier 18 controls the mean gain of the amplifier 16 and also is used to control an iris incorporated in the objective lens of the receiver.

For automatic objective lens focusing to the illuminated zone, the voltage which controls the distance to this zone and which is used by the one-shot multivibrator 12, is applied to an amplifier 20 having a non-linear amplitude characteristic and further to a servodriver 21 which controls the objective lens focus. The shape of the amplitude characteristic of the amplifier is selected to provide the best focusing of the receiving objective lens for any range.

### INDUSTRIAL APPLICATION.

The present method and device for imaging objects in reduced illumination is realized using a current technology standard for this field of industry. Exploitation of the device has demonstrated its high efficiency because it is capable, in addition to all the advantages of existing analogues, to assist for example the work of a driver in snowstorm, snowfall, etc., decreasing the unfavourable effect of light scatter by particles of fog, snow as well as to reduce the dazzling from headlight of approaching and passing vehicles.

## Claims

1. A method for imaging objects in reduced illumination conditions according to which the object (objects) is illuminated by a pulsed source of light and by an additional constant source of light, light reflected back from the objects is received by an optical image receiver which operation is synchronised to the emission of light pulse, characterised in that during the emission of each light pulse the gain of the optical image receiver is being changed continuously up to the moment when the light reflected from the most distant objects located within a selected zone of observation comes back in a manner providing the equal image brightness of lighted objects selected for observation, and the value of gain is being held at the constant level until the next light pulse emission.

2. A method as claimed in Claim 1 characterised in that in order to separate some concrete objects within a zone of observation after receiving light reflected back from these objects the gain is immediately increased then is being increased constantly and is reduced immediately after receiving the last light reflected from the concrete objects.

3. A method as claimed in Claims 1 and 2 characterised in that natural ambient illumination is used as an additional constant source of. light.

4. An apparatus for imaging objects in reduced illumination conditions comprising a pulsed source of light with a transmitting optics and an additional constant source of light. an optical image receiver with an adjustable gain, means for automatic mean brightness control of the image and a control unit, the input of which is coupled to the one of the outputs of a synchronising unit, another output of which is coupled to the input of a pulsed source of light characterised in that the synchronising unit and the control unit are designed to provide the possibility to synchronise every light pulse and to increase the gain of the optical image receiver up to the moment when the light reflected from the most distant objects within a selected zone of observation comes back and to hold the gain at the constant level until the next pulse emission.

5. The apparatus as claimed in Claim 4 characterised in that the optical image receiver comprises an image intensifier (II) with a controllable gain by means of change of the control voltage on its microchannel plate.

6. The apparatus as claimed in Claim 5 characterised in that the synchronising unit and the control unit are designed to provide instantaneous increase of the image intensifying gain, its further constant increase and its instantaneous reduce in order to separate some concrete objects located within a zone of observation.

## Patentansprüche

1. Ein Verfahren zur Bilderzeugung von Objekten unter reduzierten Beleuchtungsbedingungen gemäss welchem das Objekt (die Objekte) durch eine gepulste Lichtquelle und durch eine zusätzliche konstante Lichtquelle beleuchtet wird, von den Objekten zurückreflektiertes Licht von einem optischen Bildempfänger empfangen wird, wobei diese Operation mit der Aussendung der Lichtpulse synchronisiert ist, dadurch gekennzeichnet, dass während der Aussendung jedes Lichtpulses die Verstärkung des optischen Bildempfängers fortwährend verändert wird bis zu dem Moment, wo das von den sich innerhalb eines ausgewählten Beobachtungsgebietes befindenden entfertesten Objekten reflektierte Licht so zurückkommt, dass es die gleiche Bildhelligkeit aufweist wie die von beleuchteten, zur Beobachtung ausgewählten Objekten, und der Wert der Verstärkung bis zur nächsten Aussendung eines Lichtpulses auf einem konstanten Wert gehalten wird.

2. Ein Verfahren wie in Anspruch 1 beansprucht, dadurch gekennzeichnet, dass um einige konkrete Objekte innerhalb eines Beobachtungsgebietes zu trennen die Verstärkung erhöht wird unmittelbar nachdem von diesen Objekten zurückreflektiertes Licht empfangen wurde, dann fortwährend erhöht wird und unmittelbar nachdem das letzte, von den konkreten Objekten zurückreflektierte Licht empfangen wurde reduziert wird.

3. Ein Verfahren wie in Anspruch 1 und 2 beansprucht, dadurch gekennzeichnet, dass natürliches Umgebungslicht als zusätzliche konstante Lichtquelle benützt wird.

4. Eine Vorrichtung zur Bilderzeugung von Objekten unter reduzierten Beleuchtungsbedingungen, welche eine gepulste Lichtquelle mit einer Übertragungsoptik und einer zusätzlichen konstanten Lichtquelle, einen optischen Bildempfänger mit justierbarer Verstärkung, Mittel für automatische mittlere Helligkeitskontrolle des Bildes und eine Steuereinheit, deren Eingang mit einem der Ausgänge einer Synchronisierungseinheit gekoppelt ist von der ein anderer Ausgang mit dem Eingang einer gepulsten Lichtquelle gekoppelt ist, umfasst, dadurch gekennzeichnet, dass die Synchronisierungseinheit und die Steuereinheit entworfen sind die Möglichkeit zu bieten jeden Lichtpuls zu synchronisieren und die Verstärkung des optischen Bildempfängers bis zu dem Moment zu erhöhen, wo das von den innerhalb eines ausgewählten Beobachtungsgebietes entfertesten Objekten reflektierte Licht zurückkommt und die Verstärkung bis zur nächsten Pulsaussendung auf einem konstanten Wert zu halten.

5. Die Vorrichtung wie in Anspruch 4 beansprucht, dadurch gekennzeichnet, dass der optische Bildempfänger einen Bildverstärker (II) mit einer mittels Änderung einer Steuerspannung auf seiner Mikrokanalplatte steuerbaren Verstärkung umfasst.

6. Die Vorrichtung wie in Anspruch 5 beansprucht, dadurch gekennzeichnet, dass die Synchronisierungseinheit und die Steuereinheit entworfen sind sofortige Erhöhung der Verstärkung des Bildverstärkers, deren weitere konstante Erhöhung und deren sofortige Reduktion für die Trennung einiger konkreter, sich innerhalb eines Beobachtungsgebietes befindenden Objekte zu liefern.

## Revendications

1. Méthode pour représenter en image des objets dans des conditions d'illumination réduite selon laquelle l'objet (les objets) est illuminé par une source de lumière à pulsée et par une source de lumière constante additionnelle, la lumière renvoyée depuis des objets est reçue par un récepteur d'image optique dont l'opération est synchronisée avec l'émission des pulses lumineux, caractérisée en ce que
pendant l'émission de chaque pulse lumineux, l'amplification du récepteur d'image optique est continuellement changée jusqu'au moment où la lumière réfléchie depuis le plus éloigné des objets localisés dans une zone d'observation sélectionnée revient, de manière à fournir la même luminosité d'image des objets éclairés sélectionnés pour observation, et en ce que la valeur d'amplification est maintenue à un niveau constant jusqu'à l'émission du prochain pulse lumineux.

2. Méthode telle que revendiquée dans la revendication 1, caractérisée en ce que afin de séparer quelques objets réels dans une zone d'observation après avoir reçu la lumière réfléchie depuis ces objets, l'amplification est immédiatement augmentée ensuite elle est constamment augmentée et réduite immédiatement après avoir reçu la dernière lumière réfléchie des objets réels.

3. Méthode telle que revendiquée dans les revendications 1 et 2, caractérisée en ce que l'illumination ambiante est utilisée comme source de lumière constante additionnelle.

4. Appareil pour représenter en image des objets dans des conditions d'illumination réduite comprenant une source de lumière pulsée avec une optique de transmission ainsi qu'une source de lumière constante additionnelle, un récepteur d'image optique à contrôle de gain, des moyens de contrôle automatique de la luminosité de l'image et un dispositif de réglage dont l'entrée est reliée à une des sorties d'un dispositif de synchronisation, une autre sortie étant connectée à l'entrée d'une source de lumière pulsée, caractérisé en ce que le dispositif de synchronisation et le dispositif de réglage sont conçus afin de fournir la possibilité de synchroniser chaque pulse de lumière et d'augmenter l'amplification du récepteur d'image optique jusqu'au moment où la lumière réfléchie depuis le plus éloigné des objets localisés dans une zone d'observation sélectionnée revient, et de maintenir l'amplification au niveau constant jusqu'à la prochaine émission de pulses.

5. Appareil tel que revendiqué dans la revendication 4, caractérisé en ce que le récepteur d'image optique comprend un amplificateur d'image (II) avec une amplification contrôlable à l'aide d'un changement de la tension de commande sur sa plaque à microcanal.

6. Appareil tel que revendiqué dans la revendication 5, caractérisé en ce que le dispositif de synchronisation et le dispositif de réglage sont conçus afin de permettre une augmentation instantanée du gain d'amplification de l'image, puis son augmentation constante et sa réduction instantanée afin de séparer quelques objets réels localisés dans une zone d'observation.
